# EUROPEAN PATENT APPLICATION

(11) **EP 2 966 528 A1**
(43) Date of publication of application: **13.01.2016**
(21) Application number: 14760485.4
(22) Date of filing: 07.03.2014
(51) Int. Cl.: G05D 1/02, A47L 1/02

(54) **SELF-MOBILE ROBOT LASER-GUIDED TRAVEL OPERATING SYSTEM AND CONTROL METHOD THEREFOR**

(30) Priority: 08.03.2013 CN 201310074720
(71) Applicant: Ecovacs Robotics (Suzhou) Co., Ltd., Wuzhong District Suzhou Jiangsu 215168 (CN)
(72) Inventor: FENG, Yongbing, Suzhou Jiangsu 215168 (CN)
(74) Representative: von Kreisler Selting Werner - Partnerschaft von Patentanwälten und Rechtsanwälten mbB
(86) International application number: PCT/CN2014/073035
(87) International publication number: WO 2014/135113

(57) **Abstract**

A laser-guided walking operation system for a self-moving robot comprising a self-moving robot (10) and a laser beam transmitter (20). A control mechanism (12) and a walking mechanism (13) are arranged on a machine body (11) of the self-moving robot. The laser beam transmitter (20) is arranged at an edge of an operation area of the self-moving robot. A laser receiver (15) is arranged correspondingly on the machine body (11). The control mechanism controls the walking mechanism so that the self-moving robot performs walking operation along a linear path guided by a laser beam signal transmitted by the laser beam transmitter within the operation region. A control method of the system is: transmitting a laser signal, by a laser beam transmitter arranged at an edge of the self-moving robot operation region; when the laser receiver provided on the machine body of the self-moving robot receives the laser signal, according to the guidance of the laser signal, a control mechanism of the self-moving robot controls a walking mechanism of the self-moving robot to perform walking operation along a linear path within the operation region. The present invention allows for remote control of the robot and is high in work efficiency.

## Description

### Field of the Invention

The present invention relates to a laser-guided walking operation system for a self-moving robot and the control method thereof, belonging to the technical field of small appliance manufacture.

### Background Art

All of current glass-wiping robots move their machine bodies on the vertical glass surface by tracks or wheels. Currently, the methods to control movements of the glass-wiping robot substantially fall into two categories. The first one is that a glass-wiping robot is pulled by ropes to move vertically. For example, as disclosed in the utility model patent CN 201482774 U, a hoist is provided on the top of a glass or wall to be cleaned, and one end of a rope is connected with the hoist while the other end is connected with the top of the glass-wiping robot. The winding and unwinding of the rope is implemented via the rotating of hoist so as to drive the glass-wiping robot to vertically move up and down. In the above first method, the robot movements is controlled by the hoist via ropes, which requires the cooperation of various mechanisms, resulting in a complicated structure of the hoist and inconvenience of installing and moving. Furthermore, the mechanism may only allow for vertical movements of the robot and exert some restriction on horizontal movement control of the robot. The second method is that the horizontal and vertical movements of the glass-wiping robot are controlled by an acceleration sensor. In order to improve the cleaning efficiency of the prior glass-wiping robot, another existing method is to design the motion trajectory of the robot as a combination of horizontal movement manner and vertical movement manner. Specifically, the acceleration sensor is installed on the glass-wiping robot and connected with a control unit. The movement state of the robot is detected by the acceleration sensor and the detected result is fed back to the control unit. If the robot tilts or deviates from a predetermined path, the control unit may send instructions for making adjustments correspondingly. In the second method, both of the horizontal and vertical states of the glass-wiping robot are detected and determined by electronic devices such as an acceleration sensor. However, there is some accumulated error due to a long-term working of the electronic devices, and thus there is a possibility that when the robot has already deviated from the direction of originally designed path, the detected results by the acceleration sensor still indicate that the robot is in horizontal or vertical state, so that the robot cannot walking exactly in the designed path, having significant influences on the cleaning efficiency of the robot on a glass surface.

### Summary of Invention

In view of the above drawbacks in the prior art, the present invention intends to provide a laser-guided walking operation system for a self-moving robot and a control method thereof capable of satisfying the requirements of long distance guidance and facilitating the receipt of laser signal through adopting laser beam signal of a line laser and reasonably configuring transmitter and receivers of the line laser beam by utilizing better concentrating performance of the laser. The system structure is compact and the control method is simple and practicable, and the self-moving robot can be controlled remotely to move in straight line with a smaller linear error, thus the work efficiency is high.

The technical objective of the present invention is realized through the following technical solutions:
A laser-guided walking operation system for a self-moving robot comprising: a self-moving robot and a laser beam transmitter, the self-moving robot comprising a machine body on which a control mechanism and a walking mechanism are provided, the laser beam transmitter is provided at an edge of an operation region of the self-moving robot, and a laser receiver is correspondingly provided on the machine body; and the control mechanism controls the walking mechanism so that the self-moving robot performs walking operation along a linear path guided by a laser beam signal transmitted by the laser beam transmitter within the operation region.

The laser beam transmitter is provided at a horizontal edge or a vertical edge of the operation region.

For moving conveniently, the laser beam transmitter is movably provided at an edge of the operation region through a bracket.

In order to improve the effectiveness of signal transmitting and receiving, the laser beam transmitter is a line laser beam transmitter that transmits a line laser beam signal as laser signal.

The coverage of the line laser beam signal is within a plane vertical to the operation region.

In order to ease the control, an edge sensor and a signal generator are provided on the machine body, and a signal receiver, a control unit and a drive device are correspondingly provided on the laser beam transmitter.

After the self-moving robot reaches an edge of the operation region and the edge sensor detects an edge signal, the control mechanism controls the signal generator on the machine body to generate a corresponding signal; and after the corresponding signal is received by the signal receiver on the laser beam transmitter, the control unit controls the drive device to drive the laser beam transmitter to translate.

For purpose of facilitate the self-moving robot to complete operation efficiently, the translation distance of the laser beam transmitter is a body width of the machine body of the self-moving robot.

According to the need, the laser receiver is provided on the top of the machine body and only comprises a center laser receiver provided in the central position of the machine body; alternatively, the laser receiver is provided on the top of the machine body and comprises a center laser receiver provided on a centre line of the machine body along the walking direction of the self-moving robot and deviated laser receivers provided symmetrically with respect to the center laser receiver. The center laser receiver and the deviated laser receivers are distributed uniformly on the top of the machine body.

Each of the center laser receiver and the deviated laser receivers is an Omni-directional receiver comprising a laser Omni-directional receiver cover and a laser Omni-directional receiver seat, the inner surface of the laser Omni-directional receiver seat is a parabolic curve surface through which light rays incident from different directions are focused onto a laser receive device provided on the laser Omni-directional receiver seat.

In addition, the laser receivers are provided at the front portion, the rear portion, the left side and the right side of the machine body, wherein each of the front portion and rear portion of the machine body only comprises the center laser receiver provided at the center, or each of the front portion and the rear portion of the machine body comprises center laser receiver provided at the center and deviated laser receivers provided symmetrically with respect to the center. The laser receivers at the front portion, the rear portion, the left side and the right side of the machine body are unidirectional laser receivers.

The laser receivers are Omni-directional receivers provided on the top center of the machine body.

The self-moving robot is a glass-wiping robot, a ground cleaning robot or a monitor robot.

A control method of a laser-guided walking operation system for a self-moving robot comprises the following steps:
step 100: transmitting a laser signal at a fixed position, by a laser beam transmitter on a bracket provided at an edge of an operation region of the self-moving robot;
step 200: when laser receivers provided correspondingly on a machine body of the self-moving robot receive the laser signal, according to the guidance of the laser signal, a control mechanism of the self-moving robot controls a walking mechanism of the self-moving robot to perform walking operation along a linear path within the operation region.

Specifically, the step 200 comprises:
Step 210: from the first edge of the operation region as an initial position, the self-moving robot performs linear walking towards the third edge in vertical direction along the second edge of the operation region based on the guidance of the laser signal transmitted by the laser beam transmitter;
Step 220: after the self-moving robot reaches the third edge of the operation region and the edge sensor detects an edge signal, the control mechanism controls the signal generator on the machine body to transmit a corresponding signal; and after the corresponding signal is received by the signal receiver on the laser beam transmitter, the control unit controls the drive device to drive the laser beam transmitter to horizontally translate a certain distance along the bracket and then stop;
Step 230: the self-moving robot stops and pivotally turns 90°, then translates a certain distance correspondingly in horizontal direction along the third edge and determines whether an obstacle is detected; if an obstacle is detected, step 270 starts, otherwise the self-moving robot continues translating until the laser receiver on the self-moving robot receives the laser signal again, then the robot stops and pivotally turns 90° ;
Step 240: the self-moving robot is guided by the laser signal again to perform linear walking towards the first edge in vertical direction along the forth edge of the operation region;
Step 250: after the self-moving robot reaches the first edge of the operation region and the edge sensor detects an edge signal, the control mechanism controls the signal generator on the machine body to transmit a corresponding signal; after the corresponding signal is received by the signal receiver on the laser beam transmitter, the control unit controls the drive device to drive the laser beam transmitter to horizontally translate a certain distance along the bracket and then stop;
Step 260: the self-moving robot stops and pivotally turns 90°, translates a certain distance correspondingly in horizontal direction along the first edge and determines whether an obstacle is detected; if an obstacle is detected, step 270 starts, otherwise the self-moving robot continues translating until the laser receiver on the self-moving robot receives the laser signal again, then the robot stops and pivotally turns 90°, and the process returns to step 210;
Step 270: the robot completes a laser-guided walking operation.

In case the laser receiver comprises center laser receivers and deviated laser receivers, the linear walking in steps 210 and 240 specifically comprises:
when only the center laser receiver receives the laser beam signal, or when the same number of deviated laser receivers on each side of the center laser receiver and the center laser receiver receive the laser beam signal, the control mechanism controls to determine that the self-moving robot is in the linear path;
otherwise, when the center laser receiver receives no laser beam signal, and only the deviated laser receiver on the left or right side with reference to the walking direction of the self-moving robot receives the laser beam signal,
or when the center laser receiver and different numbers of the deviated laser receivers on both sides of the center laser receiver receive the laser beam signal, with the number of the deviated laser receivers on the left side that receive the laser beam signal bigger than that on the right side or the number of the deviated laser receivers on the right side that receive the laser beam signal bigger than that on the left side, the control mechanism determines that the self-moving robot deviates to the right or left side.

In case the laser receiver only comprises a center laser receiver, the linear walking in steps 210 and 240 specifically comprises:
when the center laser receiver receives the laser beam signal, the control mechanism determines that the self-moving robot is in the linear path;
otherwise, the control mechanism determines that the self-moving robot is deviated from the linear path, and the control mechanism adjusts the walking by turning to the left or right with reference to the walking direction of the self-moving robot until the center laser receiver receives the laser beam signal again.

As can be seen, the present invention provides a laser-guided walking operation system for a self-moving robot and a control method thereof. The present invention can satisfy the requirements of long distance guidance and facilitate the receipt of a laser signal by adopting a laser beam signal of a line laser and reasonably configuring line laser beam transmitter and receivers. The system structure is compact and the control method is simple and practicable, by which the self-moving robot can be controlled from a further distance to move in straight line with a smaller linear error, thus the work efficiency is high.

Hereinafter, the technical solutions of the present invention will be described in detail in conjunction with embodiments and accompanying drawings.

### Description of Figures

Fig. 1 is an overall schematic structure drawing of the first embodiment of the present invention;
Fig. 2 is a diagram viewing from the direction A in Fig. 1;
Fig. 3 is a schematic drawing of an internal structure of a laser Omni-directional receiver of the present invention;
Fig. 4 is a schematic drawing of the first movement state of the first embodiment of the present invention;
Fig. 5 is a schematic drawing of the second movement state of the first embodiment of the present invention;
Fig. 6 is a schematic drawing of the third movement state of the first embodiment of the present invention;
Fig. 7 is a schematic drawing of a movement path of the first embodiment of the present invention;
Fig. 8 is a schematic drawing of a movement process of the first embodiment of the present invention;
Fig. 9 is a schematic structure drawing of the second embodiment of the present invention;
Fig. 10 is a schematic structure drawing of the third embodiment of the present invention;
Fig. 11 is a schematic structure drawing of the forth embodiment of the present invention.

### Detailed Description of Preferred Embodiments

### The First Embodiment

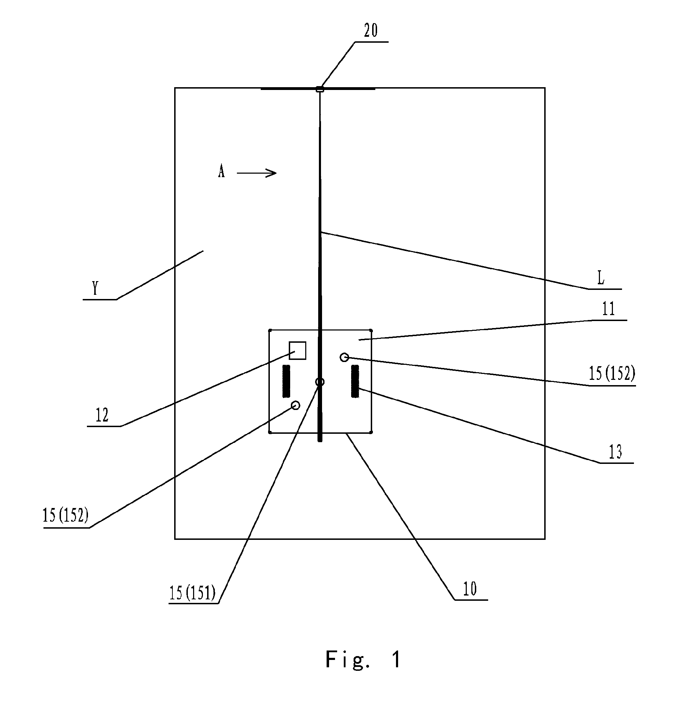

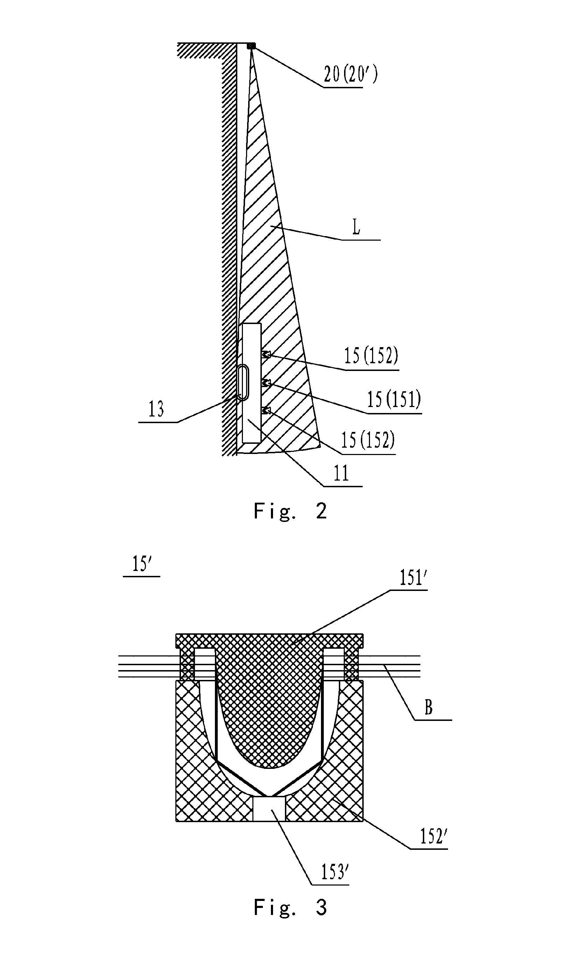

Fig. 1 is an overall schematic structure drawing of the first embodiment of the present invention, and Fig. 2 is a diagram viewing from the direction A in Fig. 1. As shown in Fig. 1 by reference to Fig. 2, the first embodiment of the present invention provides a laser-guided walking operation system for a self-moving robot comprising a self-moving robot 10 and a laser beam transmitter 20. Specifically, the self-moving robot 10 comprises a machine body 11 on which a control mechanism 12 and a walking mechanism 13 are provided. The laser beam transmitter 20 is provided at an edge of operation region Y of the self-moving robot 10 and laser receivers 15 are provided on the machine body 11 correspondingly. The control mechanism 12 controls the walking mechanism 13 so that the self-moving robot 10 may perform walking operation along a linear path guided by a laser beam signal transmitted by the laser beam transmitter 20 in the operation region Y. According to different directions of pre-designed walking path of the self-moving robot 10, the laser beam transmitter 20 may be provided at a horizontal edge or a vertical edge of the operation region Y. In order to fix the laser beam transmitter 20 conveniently in the linear movement process of the self-moving robot 10 and to facilitate the movement of the laser beam transmitter 20 in a process of re-determining a linear path when the self-moving robot 10 makes a turn, the laser beam transmitter 20 is movably provided at an edge of the operation region Y by a bracket.

In order to improve the effectiveness of signal sending and receiving, the laser beam transmitter 20 is a line laser beam transmitter 20' that transmits line laser beam signal as laser signal. Since laser is of better concentrating performance, the light may concentrate well even during long-distance transmission. However, the demand for laser transmitting and receiving directions is high and thus it is inconvenient to receive the laser signal in case a dot laser is used; and if a line laser is used instead, the requirement of long distance guidance can be satisfied and the receipt of a laser signal might be more convenient. Referring to Fig. 2, in the present embodiment, the line laser beam signal L covers a given angle range in the plane vertical to the operation region Y so that the laser receiver(s) on the self-moving robot 10 can be within the signal coverage.

A laser transmit device is provided at an edge of the operation region Y. Since the motion trajectory of the self-moving robot 10 also includes steering or turning in addition to a linear motion, for ease of control, an edge sensor and a signal generator are provided on the machine body 11 of the self-moving robot 10, and a signal receiver, a control unit and a drive device are correspondingly provided on the laser beam transmitter 20. In this way, when the self-moving robot reaches an edge of the operation region Y, the edge sensor detects an edge signal, then the control mechanism 12 controls the signal generator on the machine body 11 to generate corresponding signal; and after the corresponding signal is received by the signal receiver on the laser beam transmitter 20, the control unit controls the drive device to drive the laser beam transmitter 20 to translate. In order to facilitate the operation of the self-moving robot 10 to cover the whole operation region Y, the translation distance of the laser beam transmitter 20 is a body width of machine body 11 of the self-moving robot 10, so that a complete operation of the self-moving robot 10 on the operation region Y is guaranteed.

As shown in Fig. 1, in the present embodiment, there are three laser receivers 15 on the top of the machine body 11, in which one center laser receiver 151 is provided at a centre line of the machine body 11 along the walking direction of the self-moving robot and two deviated laser receivers 152 provided symmetrically with respect to the center laser receiver. In order to ensure that an accurate laser beam signal is received, a uniform distribution is required for the laser receivers on the top of the machine body 11.

Fig. 3 is a schematic drawing of an internal structure of a laser Omni-directional receiver of the present invention. As shown in Fig. 3, in the present embodiment, each of the center laser receiver 151 and the deviated laser receivers 152 is an Omni-directional receiver 15'. Each Omni-directional receiver 15' comprises a laser Omni-directional receiver cover 151' and a laser Omni-directional receiver seat 152' with an inner surface having parabolic curve section. The basic working principle of the laser Omni-directional receiver adopting the above structure is that: the laser Omni-directional receiver cover 151' serves to reflect light incident from various directions vertically downward. The inner surface of the laser Omni-directional receiver seat 152'is a parabolic curve surface which serves to focus parallel light incident vertically to the bottom of the laser Omni-directional receiver seat to one point, i.e., the focal point of the paraboloid. A laser receive device 153' is installed at the focal point of the laser Omni-directional receiver seat so as to receive the laser signal focused by the laser Omni-directional receiver seat 152'. After the laser Omni-directional receiver cover 151' and the laser Omni-directional receiver seat 152' are assembled, the laser Omni-directional receiver may converge light incident on the laser Omni-directional receiver from various directions to the laser receive device 153' on the laser Omni-directional receiver seat so as to obtain a laser signal. Precisely because of the above property of the laser Omni-directional receiver, even if the receivers provided on the machine body 11 are few in number, an accurate signal can still be obtained and the self-moving robot 10 can be accurately guided to move along a predetermined trajectory.

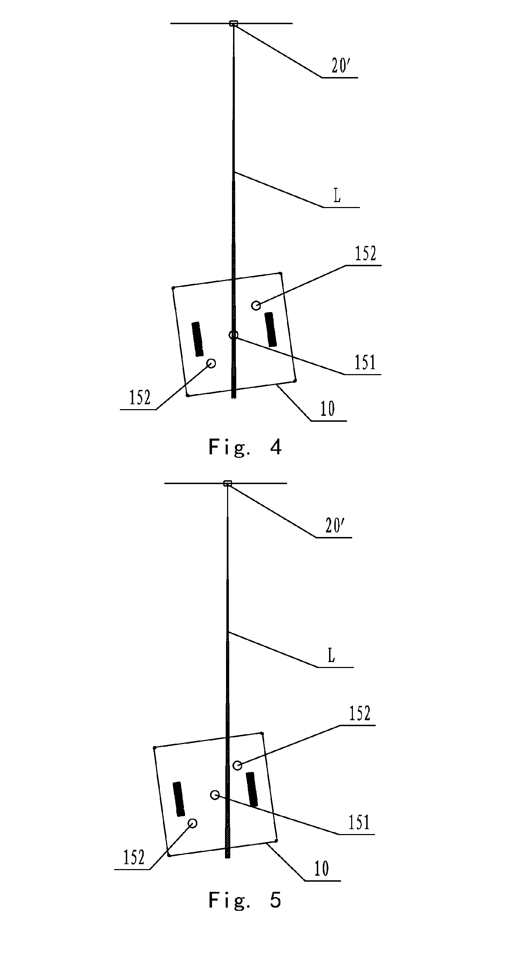

Figs. 4-6 are schematic drawings of the first to third movement states of the first embodiment of the present invention, respectively. As shown in Figs. 4-6, in the present embodiment, a line laser beam generator 20' is installed at an upper edge of the operation region of the self-moving robot 10 along the transverse direction, and the line laser beam generator 20' is fixed on a bracket and transmits signals which are vertical to the operation region Y. At the top of the self-moving robot 10, three laser Omni-directional receivers for receiving line laser signal are provided in such way that one center laser receiver 151 installed at the center and two deviated laser receivers 152 installed on both sides symmetrically. When the self-moving robot 10 moves up and down in the operation region Y, if only the center laser receiver 151 receives a signal (when the self-moving robot is close to the laser beam generator 20'), or all of the center laser receiver 151 and two deviated laser receivers 152 receive the signal (when the self-moving robot is far away from the laser beam generator 20', the line laser beam signal L diverges at certain angle), the robot is considered to be in a vertical walking state; if the center laser receiver 151 receives no signal, or only the deviated laser receiver 152 on the left or right side with reference to the walking direction of the self-moving robot receives a signal, or when the center laser receiver 151 and the left deviated laser receiver 152 receive laser signal, or when the center laser receiver 151 and the right deviated laser receiver 152 receive laser signal, the robot is considered to be deviated from the vertical direction, and the robot may return to the vertical walking state after multiple automatic direction judgments and adjustments. In special cases, as shown in Fig. 4, when the robot body just takes off the vertical direction at certain angle, only the center laser receiver receives the laser signal, and the control mechanism considers that the machine body is still in the vertical state. However, after the machine body continuously walks along such tilted direction without any adjustment of its walking direction, the center laser receiver cannot receive a signal any more, or only the deviated laser receivers can receive the signal, thus the control mechanism determines that the machine body is deviated from the vertical direction and then correspondingly adjusts the walking direction of the machine.

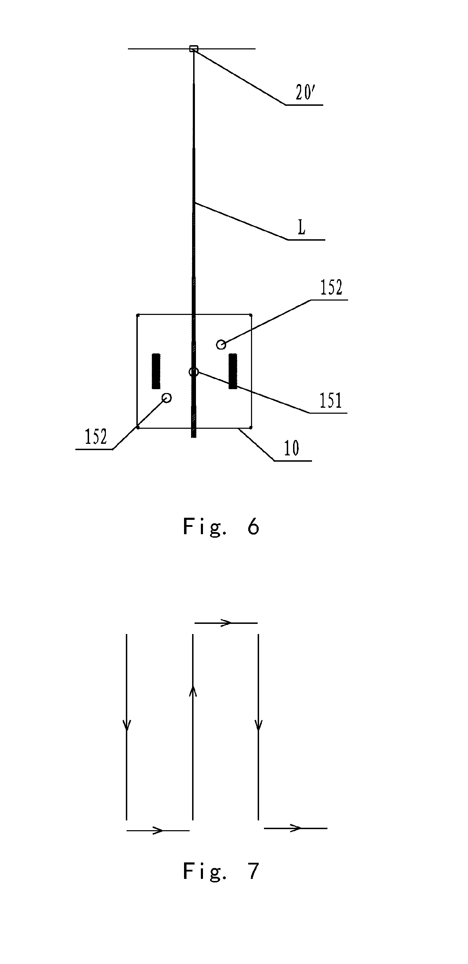

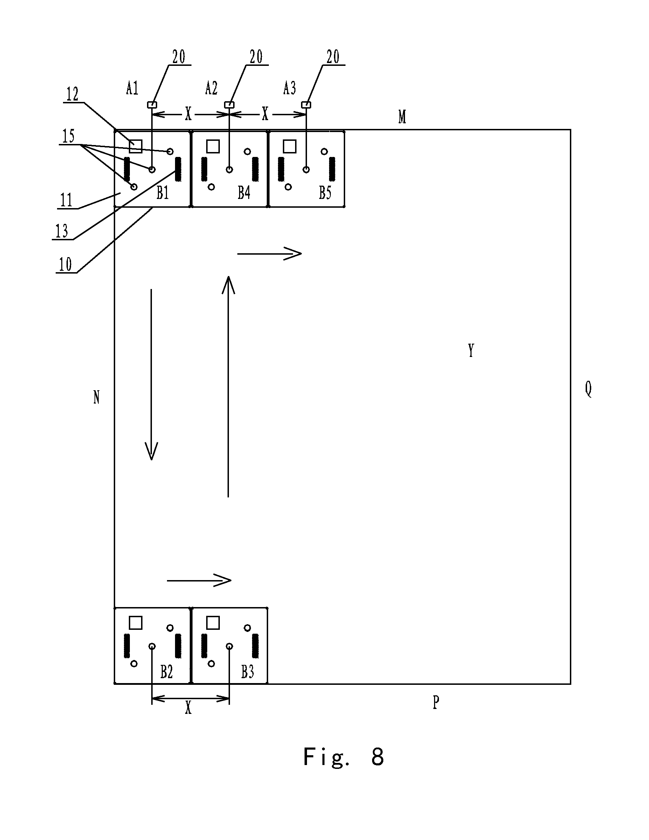

Fig. 7 is a schematic drawing of a movement path of the first embodiment of the present invention; Fig. 8 is a schematic drawing of a movement process of the first embodiment of the present invention. As shown in Fig. 7, the movement path of the self-moving robot 10 is of the shape like a Chinese character " 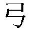 ". The specific movement process of the self-moving robot 10 is shown by reference to Fig. 8. Generally, the laser beam transmitter 20 provided at an edge of the operation region Y of the self-moving robot 10 transmits a laser signal at a fixed position on the bracket, and the laser receivers 15 correspondingly provided on machine body 11 of the self-moving robot 10 receive the laser signal. Based on the guidance of the laser signal, the control mechanism 12 of the self-moving robot 10 controls the walking mechanism 13 of the robot to perform a walking operation along a linear path within the operation region Y.

Specifically, the first edge M at an apex angle of the operation region Y is considered as an initial position B1 of the self-moving robot 10, and the robot is guided by the laser signal transmitted by the laser beam transmitter 20 to walk linearly towards the third edge P in vertical direction along the second edge N of the operation region Y. When the self-moving robot 10 is at position B1 of the operation region Y, the laser beam transmitter 20 is at position A1 at one end of the bracket. When the self-moving robot 10 moves to the third edge P of the operation region Y, the self-moving robot 10 is at position B2. After the edge sensor detects an edge signal, the control mechanism 12 controls the signal generator on the machine body 11 to transmit a corresponding signal; and after the signal receiver on the laser beam transmitter 20 receives the corresponding signal, the control unit controls the drive device to drive the laser beam transmitter 20 to horizontally move certain distance X along the bracket and then stop at position A2.

The self-moving robot 10 stops at position B2 and pivotally turns 90°, then moves certain distance in horizontal direction along the third edge P and determines whether an obstacle is detected. If an obstacle is detected, the robot stops walking, otherwise the self-moving robot continues to translate until the laser receivers on the self-moving robot 10 receive the laser signal again. After that, the robot stops at position B3 and pivotally turns 90°, At this time, the translation distances of the self-moving robot 10 and the laser beam transmitter 20 are the same length of X.

The self-moving robot 10 is guided by the laser signal again to walk linearly towards the first edge M in vertical direction along the forth edge Q of the operation region Y from the position B3.

After the edge sensor detects an edge signal when the self-moving robot 10 moves to an position B4 of the first edge M of the operation region Y, the control mechanism 12 controls the signal generator on the machine body 11 to transmit a corresponding signal; and after the corresponding signal is received by the signal receiver on the laser beam transmitter 20, the control unit controls the drive device to drive the laser beam transmitter 20 to horizontally move certain distance X along the bracket and then stop at position A3.

The self-moving robot 10 stops at the position B4 and pivotally turns 90°, correspondingly translate certain distance in horizontal direction along the first edge M and determines whether an obstacle is detected. If an obstacle is detected, the robot stops walking, otherwise the self-moving robot continues to translate until the laser receivers on the self-moving robot 10 receive the laser signal again. Then, the robot stops at position B5 and pivotally turns 90° . At this time, the translation distances of the self-moving robot 10 and the laser beam transmitter 20 are the same length of X.

As described above, the self-moving robot 10 has performed one complete path unit of the whole movement path with " 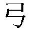 " shape as shown in Fig. 7. The self-moving robot 10 may perform reciprocating movement by repeating the above steps until the task on the operation region Y is accomplished. In order to guarantee that the self-moving robot 10 can operate thoroughly on the operation region Y and avoid any omission, the laser transmit device horizontally moves a distance of one body width after the self-moving robot 10 completes the operation of one body width, and when the laser Omni-directional receiver installed at the top center of machine body 11 of the self-moving robot 10 receives a line laser signal, it is considered that the self-moving robot 10 moves to an accurate position. Then, the robot continues to perform the linear operation vertically. In this way, the moving distances of the self-moving robot 10 and the laser transmit device are the same.

In the process of the self-moving robot 10 moving linearly along the second edge N or the forth edge Q, the robot follows the guidance of the line laser beam signal L transmitted by the line laser beam generator 20' in real time, so as to prevent the self-moving robot 10 from deviating from a linear direction all the time. Specifically, when only the center laser receiver 151 receives the laser beam signal L, or when the same number of deviated laser receivers 152 located at each side of the center laser receiver as well as the center laser receiver 151 receive the laser beam signal, the control mechanism 12 controls to determine that the self-moving robot 10 is in the linear pat; otherwise, when the center laser receiver 151 receives no signal, and only the deviated laser receiver 152 on the left or right side with reference to the walking direction of the self-moving robot 10 receives the laser beam signal L, or when the center laser receiver 151 and different numbers of the deviated laser receivers 152 on both sides of the center laser receiver receive the laser beam signal L, with the number of the deviated laser receivers on the left side that receive the laser beam signal bigger than that on the right side or the number of the deviated laser receivers on the right side that receive the laser beam signal bigger than that on the left side, the control mechanism 12 determines that the self-moving robot 10 deviates to the right side or left side. In a particular case, when neither the center laser receiver 151 nor the left or right deviated laser receiver 152 receives laser beam signal L at the same time, the robot cannot determine temporarily whether it deviates to the right side or left side. Only when deviated laser receiver 152 on left or right side receives the laser beam signal L after the robot continues walking for a certain distance, the control mechanism 12 can determine whether the self-moving robot 10 deviates to the right side or left side.

Based on the laser beam signal L received by the center laser receiver 151 and the deviated laser receivers 152, the control mechanism 12 of the self-moving robot 10 controls the walking mechanism 13 to adjust the walking direction of the self-moving robot 10 so as to guarantee a linear movement thereof.

In conclusion, the control method of laser-guided walking operation system for a self-moving robot of the present invention comprises the following steps:
Step 100: transmitting a laser signal at a fixed position, by a laser beam transmitter on a bracket provided at an edge of the operation region of the self-moving robot;
Step 200: laser receiver(s) correspondingly provided on the machine body of the self-moving robot receives laser signal, and based on the guidance of the laser signal, a control mechanism of the self-moving robot controls a walking mechanism of the self-moving robot to perform walking operation along a linear path within the operation region Y.

Specifically, the step 200 includes:
Step 210: from the first edge M of the operation region as an initial position, the self-moving robot performs linear walking towards the third edge P in vertical direction along the second edge N of the operation region based on the guidance of the laser signal transmitted by the laser beam transmitter;
Step 220: after the self-moving robot reaches the third edge P of the operation region and the edge sensor detects an edge signal, the control mechanism controls the signal generator on the machine body to transmit a corresponding signal, and after the corresponding signal is received by the signal receiver on the laser beam transmitter, the control unit controls the drive device to drive the laser beam transmitter to horizontally translate a certain distance along the bracket and then stop;
Step 230: the self-moving robot stops and pivotally turns 90°, then translates a certain distance correspondingly in a horizontal direction along the third edge P and determines whether an obstacle is detected; if an obstacle is detected, step 270 starts, otherwise the self-moving robot continues to translate until the laser receiver on the self-moving robot receives the laser signal again, then the robot stops and pivotally turns 90° ;
Step 240: the self-moving robot is guided by the laser signal again to perform linear walking towards the first edge M in vertical direction along a forth edge Q of the operation region Y;
Step 250: after the self-moving robot reaches the first edge M of the operation region and the edge sensor detects an edge signal, the control mechanism controls the signal generator on the machine body to transmit a corresponding signal; after the corresponding signal is received by the signal receiver on the laser beam transmitter, the control unit controls the drive device to drive the laser beam transmitter to horizontally translate a certain distance along the bracket and then stop;
Step 260: the self-moving robot stops and pivotally turns 90°, translates a certain distance correspondingly in horizontal direction along the first edge M and determines whether an obstacle is detected, if an obstacle is detected, step 270 starts, otherwise the self-moving robot continues to translate until the laser receiver on the self-moving robot receives the laser signal again, then the robot stops and pivotally turns 90°, and then the process returns to step 210;
Step 270: the robot completes a laser-guided walking operation.

Specifically, the linear walking in steps 210 and 240 comprises:
when only the center laser receiver receives the laser beam signal,
or when the same number of deviated laser receivers on each side of the center laser receiver and the center laser receiver receive the laser beam signal, the control mechanism controls to determine that the self-moving robot is in the linear path;
otherwise, when the center laser receiver receives no laser beam signal, and only the deviated laser receiver on the left or right side with reference to the walking direction of the self-moving robot receives the laser beam signal,
or when the center laser receiver and different numbers of the deviated laser receivers on both sides of the center laser receiver receive the laser beam signal L, with the number of the deviated laser receivers on the left side that receive the laser beam signal is bigger than that on the right side or the number of the deviated laser receivers on the right side that receive the laser beam signal is bigger than that on the left side, the control mechanism determines that the self-moving robot deviates to the right side or left side.

If the above laser-guided walking operation system for a self-moving robot and the control method thereof is applied to a glass-wiping robot, the line laser beam generator may be install at one side of a glass or a wall to be cleaned through a installing bracket on which a drive device for driving the installing bracket is mounted, and corresponding laser receive devices, edge sensors and signal transmitting units are provided on the robot. The installing bracket is further provided with corresponding signal receiving units. As to the working principle of the laser-guided linear movements, please refer to the laser-guided mechanism, which will be omitted herein.

As to a glass-wiping robot, two cleaning modes of horizontal path cleaning and vertical path cleaning may be comprised. When the horizontal cleaning mode is performed, the line laser beam generator is installed at the left or right side of the glass or wall through the installing bracket, and the line laser beam generator may move up and down together with the installing bracket. At first, the robot moves along a horizontal direction guided by the laser, and when the robot reaches an edge of the glass or wall, the edge sensor on the robot may detect an edge signal and send the detected signal to the signal receiving unit on the installing bracket through the signal transmitting unit. After the signal receiving unit receives the signal indicating that the robot reaches an edge, the driving unit drives the laser beam generator to move upwards or downwards for a certain distance together with the installing bracket, and then the robot moves upwards or downwards correspondingly. When the laser receive device on the robot detects a laser, the robot starts to perform linear movement along a laser path again. When the vertical cleaning mode is performed, the line laser beam generator is installed at the upper or lower side of the glass or wall through the installing bracket, and the line laser beam generator may move to left and right together with the installing bracket. At first, the robot moves along a vertical direction guided by the laser, and when the robot reaches an edge of the glass or wall, an edge sensor on the robot may detect an edge signal and send the detected signal to the signal receiving unit on the installing bracket through the signal transmitting unit. After the signal receiving unit receives the signal indicating that the robot reaches an edge, the driving unit drives the laser beam generator to move to the left or right for a certain distance together with the installing bracket, and then the robot moves to the left or right correspondingly. When the laser receive device on the robot detects a laser, the robot starts to perform linear movement along a laser path again. By this way, the cleaning of whole glass or wall is completed.

Please note that the self-moving robot may have various operation functions including, in addition to the above glass-wiping robot, ground cleaning robot, a monitor robot and the like. However, the configuration structure and control method of the laser-guided walking system of the present invention are substantially the same regardless of the applications for different kinds of self-moving robot. Some detailed technical features surely will be adaptively changed depending on the specific kind of the self-moving robot.

### The Second Embodiment

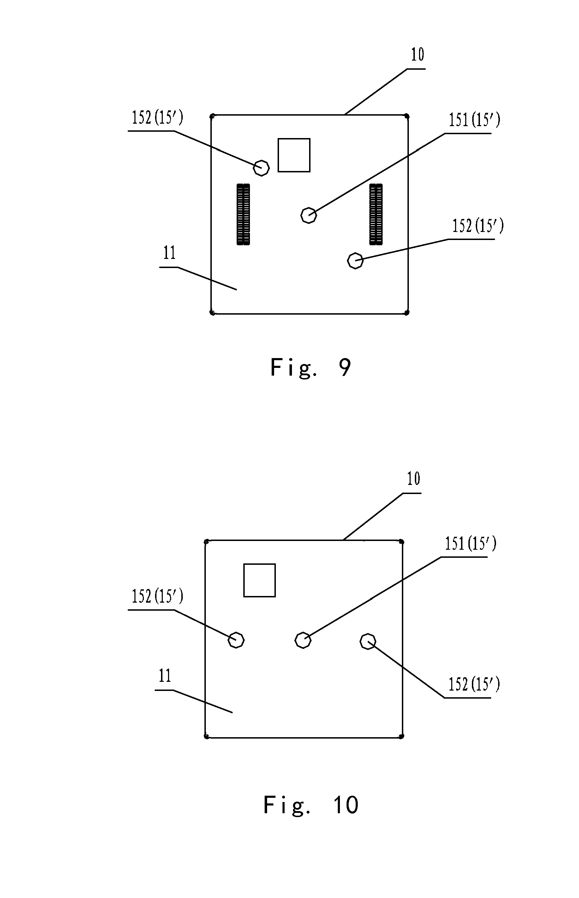

Fig. 9 is a schematic structure drawing of a second embodiment of the present invention. As shown in Fig. 9, the present embodiment and the first embodiment only differ in the setting position of the laser receiver 15 on the top of machine body 11 of the self-moving robot 10. By comparison with Fig. 1 in the first embodiment, there are three laser receivers provided at equal interval substantially along a diagonal of the top surface of machine body 11 of the self-moving robot 10, and the direction of their arrangement is upper right-center-lower left. As shown in Fig. 9, in the present embodiment, there are also three laser receivers provided at equal interval substantially along a diagonal of the top surface of machine body 11 of the self-moving robot 10, and the direction of their arrangement is upper left-center-lower right. The laser receivers of the present embodiment are the same as that in the first embodiment, which are Omni-directional laser receivers 15'.

The other technical features of the present embodiment are the same as those of the first embodiment; please refers to the first embodiment for detailed description which will be omitted here.

### The Third Embodiment

Fig. 10 is a schematic structure drawing of a third embodiment of the present invention. As shown in Fig. 10, in the present embodiment, there are also three laser receivers 15, however, they are provided horizontally at equal interval along the middle line of the top surface of machine body 11 of the self-moving robot 10. The laser receivers of the present embodiment are the same as that of the first embodiment, which are Omni-directional laser receivers 15'.

The other technical features of the present embodiment are the same as those of the first embodiment; please refers to the first embodiment for detailed description which will be omitted here.

### The Forth Embodiment

In the present embodiment, the installation way of the laser receivers is different from that of the preceding three embodiments in that one center laser receiver is only provided on the top center of the machine body and the center laser receiver is an Omni-directional laser receiver with the same structure and working principle as those described in the first embodiment. Since the installation way and the number of the laser receivers change, the control method of the control mechanism for controlling the machine body to walk along a linear path guided by a laser also changes. In the present embodiment, the process of the control mechanism for controlling the machine body to walk along a linear path guided by a laser is achieved as follows: when the center laser receiver receives a laser beam signal, the control mechanism determines that the self-moving robot is in the linear path, otherwise the control mechanism determines that the self-moving robot is deviated from the linear path and the control mechanism adjusts the walking by turning to the left or right with reference to the walking direction of the self-moving robot until the center laser receiver receives the laser beam signal again.

The other technical features of the present embodiment are the same as those of the first embodiment; please refer to the first embodiment for detailed information, which will be omitted here.

### The Fifth Embodiment

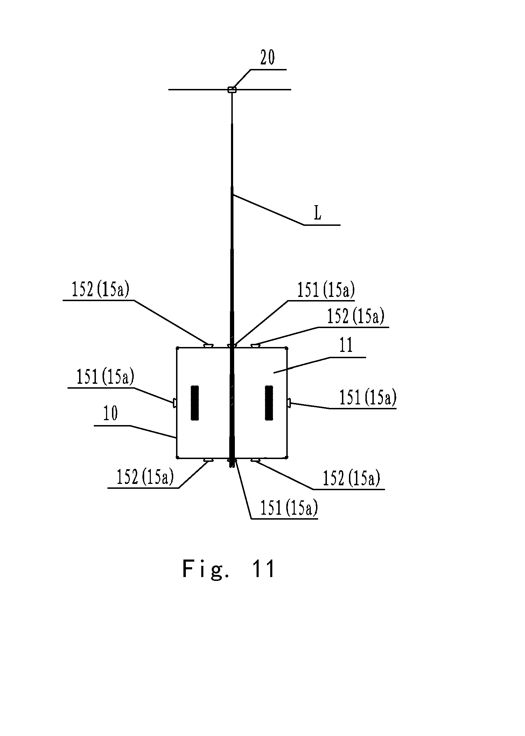

Fig. 11 is a schematic structure drawing of a fifth embodiment of the present invention. As shown in Fig. 11, the type of the laser receiver of the present embodiment is different from that of the preceding four embodiments and is a normal unidirectional laser receiver 15a. Since a different type of laser receiver is adopted and the working mode thereof changes accordingly, the configuration manner of the laser receiver on machine body 11 of the self-moving robot 10 also changes correspondingly. The unidirectional laser receivers are provided at the front portion, the rear portion, the left side and the right side of the machine body 11, and the front portion and the rear portion of the machine body 11 at least comprise a center laser receiver 151 provided in the center thereof and two deviated laser receivers 152 provided symmetrically with respect to the center.

In the present embodiment, the process of keeping walking linearly for the self-moving robot 10 is implemented as follows: as shown in Fig. 11, in the present embodiment, since one or more unidirectional laser signal receiving devices 15a are installed at the front portion, the rear portion, the left side and the right side of the self-moving robot 10 respectively, when a line laser beam generator 20 installed at an edge of the operation region Y transmits a laser beam L which is vertical to the operation region Y, if only the center laser receivers 151 located at the front portion and the rear portion receive the signal, or all of the center laser receivers 151 and the deviated laser receivers 152 on two sides receive the laser signal, it is considered that the self-moving robot 10 walks along a linear direction; if the center laser receivers 151 receive no signal, and only the deviated laser receiver 152 on the left or right side with reference to the walking direction of the self-moving robot receives a signal, or only the center laser receivers 151 and the deviated laser receiver 152 on the left side receive a laser signal, or only the center laser receivers 151 and the deviated laser receiver 152 on the right side receive a laser signal, it is considered that the self-moving robot 10 is deviated to the right or left from the vertical direction guided by the laser signal L. The robot may return to a vertical walking state after multiple automatic direction adjustments.

In conclusion, as can be seen from the above five embodiments, on condition that the laser-guided walking operation system for a self-moving robot of the present invention could accomplish a whole working process, it is required for the machine body of the self-moving robot to ensure that the line laser signal can be received all around the machine body, and the present invention achieves such control by two methods. One method is to install Omni-directional laser receivers on the top of the machine body of the self-moving robot. Since the Omni-directional laser receivers may receive the laser signal from all around and it is installed on the top of the machine body, the signal to be received by the laser receiver cannot be blocked regardless of its orientation. The other method is to install normal unidirectional laser receivers around the machine body of the self-moving robot according to the need. Since the laser receivers are mounted all around the machine body, the purpose of all-directional receiving of the laser signal can also be achieved. The present invention utilizes good concentrating performance of the laser and can satisfy the requirements of long distance guidance and facilitate the receipt of a laser signal by adopting laser beam signal of a line laser and reasonably configuring line laser beam transmitter and receivers. The system structure is compact and the control method is simple and practicable, and the self-moving robot can be controlled remotely to move in straight line with a smaller linear error, thus the work efficiency is high.

## Claims

1. A laser-guided walking operation system for a self-moving robot comprising:
a self-moving robot (10) and a laser beam transmitter (20), the self-moving robot (10) comprising a machine body (11) on which a control mechanism (12) and a walking mechanism (13) are provided, **characterized in that**,
the laser beam transmitter (20) is provided at an edge of an operation region of the self-moving robot, and a laser receiver (15) is correspondingly provided on the machine body (11); and the control mechanism controls the walking mechanism (13) so that the self-moving robot (10) performs walking operation along a linear path guided by a laser beam signal transmitted by the laser beam transmitter (20) within the operation region.

2. The laser-guided walking operation system for a self-moving robot of claim 1, **characterized in that**, the laser beam transmitter (20) is provided at a horizontal edge or a vertical edge of the operation region.

3. The laser-guided walking operation system for a self-moving robot of claim 2, **characterized in that**, the laser beam transmitter (20) is movably provided at an edge of the operation region through a bracket.

4. The laser-guided walking operation system for a self-moving robot of claim 1, **characterized in that**, the laser beam transmitter (20) is a line laser beam transmitter (20') that transmits a line laser beam signal (L) as laser signal.

5. The laser-guided walking operation system for a self-moving robot of claim 4, **characterized in that**, the coverage of the line laser beam signal (L) is within a plane vertical to the operation region.

6. The laser-guided walking operation system for a self-moving robot of claim 5, **characterized in that**, an edge sensor and a signal generator are provided on the machine body (11), and a signal receiver, a control unit and a drive device are correspondingly provided on the laser beam transmitter (20);
After the self-moving robot (10) reaches an edge of the operation region and the edge sensor detects an edge signal, the control mechanism controls the signal generator on the machine body to generate a corresponding signal, and after the corresponding signal is received by the signal receiver on the laser beam transmitter (20), the control unit controls the drive device to drive the laser beam transmitter (20) to translate.

7. The laser-guided walking operation system for a self-moving robot of claim 6, **characterized in that**, the translation distance of the laser beam transmitter (20) is a body width of the machine body (11) of the self-moving robot.

8. The laser-guided walking operation system for a self-moving robot of claim 1, **characterized in that**, the laser receiver (15) is provided on the top of the machine body (11) and comprises a center laser receiver (151) provided on a centre line of the machine body (11) along the walking direction of the self-moving robot and deviated laser receivers (152) provided symmetrically with respect to the center laser receiver (151).

9. The laser-guided walking operation system for a self-moving robot of claim 8, **characterized in that**, the center laser receiver (151) and the deviated laser receivers (152) are distributed uniformly on the top of the machine body (11).

10. The laser-guided walking operation system for a self-moving robot of claim 9, **characterized in that**, each of the center laser receiver (151) and deviated laser receivers (152) is an Omni-directional receiver comprising a laser Omni-directional receiver cover (151') and a laser Omni-directional receiver seat (152'), the inner surface of the laser Omni-directional receiver seat (152') is a parabolic curve surface through which light rays incident from different directions are focused onto a laser receive device (153') provided on the laser Omni-directional receiver seat (152').

11. The laser-guided walking operation system for a self-moving robot of claim 1, **characterized in that**, the laser receivers (15) are provided at the front portion, the rear portion, the left side and the right side of the machine body, wherein each of the front portion and the rear portion of the machine body (11) comprises center laser receiver (151) provided at the center and deviated laser receivers (152) provided symmetrically with respect to the center, respectively;
or each of the front portion and rear portion of the machine body (11) only comprises the center laser receiver (151) provided at the center.

12. The laser-guided walking operation system for a self-moving robot of claim 11, **characterized in that**, the laser receivers are unidirectional laser receivers (15a).

13. The laser-guided walking operation system for a self-moving robot of claim 1, **characterized in that**, the laser receivers (15) are Omni-directional receivers provided on the top center of the machine body (11).

14. The laser-guided walking operation system for a self-moving robot of claims 1 to 13, **characterized in that**, the self-moving robot is a glass-wiping robot, a ground cleaning robot or a monitor robot.

15. A control method of a laser-guided walking operation system for a self-moving robot, **characterized in that**, the method comprises the following steps:
step 100: transmitting a laser signal at a fixed position, by a laser beam transmitter on a bracket provided at an edge of an operation region of the self-moving robot;
step 200: when laser receivers provided correspondingly on a machine body of the self-moving robot receive the laser signal, according to the guidance of the laser signal, a control mechanism of the self-moving robot controls a walking mechanism of the self-moving robot to perform walking operation along a linear path within the operation region.

16. A control method of claim 15, **characterized in that**, step 200 specifically comprises:
Step 210: from the first edge of the operation region as an initial position, the self-moving robot performs linear walking towards the third edge in vertical direction along the second edge of the operation region based on the guidance of the laser signal transmitted by the laser beam transmitter;
Step 220: after the self-moving robot reaches the third edge of the operation region and the edge sensor detects an edge signal, the control mechanism controls the signal generator on the machine body to transmit a corresponding signal; and after the corresponding signal is received by the signal receiver on the laser beam transmitter, the control unit controls the drive device to drive the laser beam transmitter to horizontally translate a certain distance along the bracket and then stop;
Step 230: the self-moving robot stops and pivotally turns 90°, then translates a certain distance correspondingly in horizontal direction along the third edge and determines whether an obstacle is detected; if an obstacle is detected, step 270 starts, otherwise the self-moving robot continues translating until the laser receiver on the self-moving robot receives the laser signal again, then the robot stops and pivotally turns 90° ;
Step 240: the self-moving robot is guided by the laser signal again to perform linear walking towards the first edge in vertical direction along the forth edge of the operation region;
Step 250: after the self-moving robot reaches the first edge of the operation region and the edge sensor detects an edge signal, the control mechanism controls the signal generator on the machine body to transmit a corresponding signal; after the corresponding signal is received by the signal receiver on the laser beam transmitter, the control unit controls the drive device to drive the laser beam transmitter to horizontally translate a certain distance along the bracket and then stop;
Step 260: the self-moving robot stops and pivotally turns 90°, translates a certain distance correspondingly in horizontal direction along the first edge and determines whether an obstacle is detected; if an obstacle is detected, step 270 starts, otherwise the self-moving robot continues translating until the laser receiver on the self-moving robot receives the laser signal again, then the robot stops and pivotally turns 90°, and the process returns to step 210;
Step 270: the robot completes a laser-guided walking operation.

17. A control method of claim 16, **characterized in that**, the laser receiver comprises center laser receivers and deviated laser receivers, and the linear walking in steps 210 and 240 specifically comprises:
when only the center laser receiver receives the laser beam signal, or when the same number of deviated laser receivers on each side of the center laser receiver and the center laser receiver receive the laser beam signal, the control mechanism controls to determine that the self-moving robot is in the linear path;
otherwise, when the center laser receiver receives no laser beam signal, and only the deviated laser receiver on the left or right side with reference to the walking direction of the self-moving robot receives the laser beam signal,
or when the center laser receiver and different numbers of the deviated laser receivers on both sides of the center laser receiver receive the laser beam signal, with the number of the deviated laser receivers on the left side that receive the laser beam signal bigger than that on the right side or the number of the deviated laser receivers on the right side that receive the laser beam signal bigger than that on the left side, the control mechanism determines that the self-moving robot deviates to the right or left side.

18. A control method of claim 16, **characterized in that**, the laser receiver only comprises a center laser receiver, and the linear walking in steps 210 and 240 specifically comprises:
when the center laser receiver receives the laser beam signal, the control mechanism determines that the self-moving robot is in the linear path;
otherwise, the control mechanism determines that the self-moving robot is deviated from the linear path, and the control mechanism adjusts the walking by turning to the left or right with reference to the walking direction of the self-moving robot until the center laser receiver receives the laser beam signal again.
